# FASCICULE DE BREVET EUROPEEN

(11) **EP 2 989 248 B1**
(45) Date de publication et mention de la délivrance du brevet: **28.11.2018**
(21) Numéro de dépôt: 14727581.2
(22) Date de dépôt: 22.04.2014
(51) Int. Cl.: D21H 17/24, D21H 17/28, D21H 19/54, D21H 19/82, C09D 105/02, C09D 105/16, C08L 5/02, C08L 5/16, C09D 103/02, C08L 3/02

(54) **SAUCES DE COUCHAGE A BASE DE DEXTRINES**
BESCHICHTUNGSMASSEN AUF DEXTRINBASIS
DEXTRIN-BASED COATING SLIPS

(30) Priorité: 24.04.2013 FR 1353742
(43) Date de publication de la demande: 02.03.2016
(73) Titulaire: Roquette Frères, 62136 Lestrem (FR)
(72) Inventeur: ONIC, Ludivine, F-62136 Lestrem (FR); BOUXIN, Christian, F-59274 Marquillies (FR); PAJARI, Timo, FI-02660 Espoo (FI); DAUCHY, Patrick, F-62136 La Couture (FR)
(74) Mandataire: Cabinet Plasseraud
(86) Numéro de dépôt international: PCT/FR2014/050975
(87) Numéro de publication internationale: WO 2014/174205

(56) Documents cités:
- US-A- 5 004 767
- US-A- 5 147 907

## Description

### Domaine de l'invention

L'invention a pour objet une composition, apte à être utilisée dans le couchage de papier, comprenant des mélanges de dextrines, de différentes masses moléculaires.

### Etat de la technique

Dans l'industrie du papier et du carton, il existe de nombreuses qualités différentes de produits. Les papiers et cartons de haute qualité, par exemple ceux utilisés pour les magazines ou encore des plaquettes de communication, sont généralement des papiers ou cartons couchés, regroupés sous le terme « papiers couchés » dans la présente demande.
Un papier couché est un papier dont la surface est recouverte d'une ou plusieurs « couches », généralement à base de pigments en mélange avec des liants et des produits d'addition divers.
Ces couches sont appliquées par un procédé de couchage qui est réalisé à l'aide de compositions aqueuses appelées « sauces de couchage ». Le but de cette opération est de rendre la surface rugueuse et macroporeuse du papier ou du carton en une face unie et microporeuse, ceci afin de permettre une meilleure reproduction des impressions.
De plus, on peut par cette opération réaliser une amélioration de la blancheur, du brillant, ou encore du toucher du papier imprimé.
Les papiers couchés doivent également présenter une bonne résistance à l'arrachement humide, qui peut être déterminée par un appareil IGT (Institut voor Graphisce Technieck). Cette propriété est très importante dans le domaine des papiers couchés car elle permet d'obtenir une bonne qualité d'impression, en particulier dans le cas des impressions off-set. En effet, lors du procédé d'impression, on réalise des applications successives de différentes encres grasses de couleur sur le papier. Afin d'avoir une impression nette, des rouleaux encreurs, qui servent d'empreinte, sont recouverts de zones d'encre grasse et de zones d'eau de mouillage, qui est une composition à base aqueuse, qui vont empêcher cette encre grasse d'imprimer le papier. La présence d'eau sur le rouleau permet ainsi de délimiter les zones à imprimer. Cette eau va donc humidifier le papier lors du procédé d'impression. L'encre est donc appliquée sur un papier légèrement humide et il est donc nécessaire que la couche soit résistante à cette humidité pour que l'impression soit de qualité.

Pour réaliser le papier couché, on applique une ou plusieurs fines couches de sauce de couchage, que l'on fait sécher sur le papier. Industriellement, cette composition est appliquée par enduction en continu sur un papier, généralement par les techniques dites de film press ou couchage par lame (en anglais blade coating).
L'épaisseur de la couche peut être réglée en ajustant la pression et la vitesse de défilement du papier et, dans le cas de film press, le filetage des crayons utilisés.
Ces papiers ou cartons couchés peuvent ensuite être utilisés dans des procédés d'impression, par exemple de type off set, héliogravure, rotogravure, lithogravure, jet d'encre ou flexographie.

Dans la sauce de couchage, les liants ont pour fonction de faire coller les pigments entre eux dans la couche obtenue, ainsi que de faire adhérer la couche au papier. Cette couche est obtenue après séchage de ladite sauce lors du procédé de couchage du papier.

Les quantités de pigments dans la sauce sont généralement très élevées (généralement supérieures à 50% de la matière sèche de la sauce). Par ailleurs, cette sauce comprend généralement des quantités d'eau assez limitées, généralement inférieures à 60%, voire inférieures à 50%, en masse totale de la sauce de couchage. En effet, la couche étant obtenue par séchage de la sauce appliquée lors du procédé de couchage, il est donc avantageux que la quantité en eau dans la sauce soit faible afin d'évaporer aisément l'eau et ainsi pouvoir obtenir rapidement le papier couché, tout en utilisant peu d'énergie pour éliminer cette eau.
Parallèlement, il est également nécessaire que la viscosité de la sauce de couchage ne soit pas trop élevée, et ceci malgré la faible quantité d'eau comprise dans la sauce. Cela permet d'appliquer aisément la sauce : si cette dernière n'est pas assez fluide, il est alors nécessaire de ralentir le procédé de couchage afin d'obtenir une couche ayant l'épaisseur désirée.
Les liants généralement utilisés dans les sauces sont des polymères styréniques, généralement de type styrène-butadiène ou styrène-acrylate qui sont utilisés sous forme de dispersions dans l'eau, autrement dit des latex. Ces latex sont fluides, ce qui permet de fabriquer des sauces ayant un comportement rhéologique très bien adapté au procédé de couchage sur le papier.
De plus, les propriétés du papier obtenu sont excellentes, ce qui s'explique par une excellente adhérence des charges entre elles ainsi que par un très bon collage de la couche avec le papier.

L'imprimabilité et la résistance des papiers couchés obtenus sont par ailleurs excellentes.

Cependant, ces dispersions peuvent être relativement instables en fonction des conditions de stockage. Leur stockage ne peut être fait sous forme sèche, ce qui implique, du fait de la présence d'eau, des coûts de transport supplémentaires. De plus, elles sont produites à partir de ressources pétrolières, non renouvelables. Ces dispersions peuvent être également relativement coûteuses. Enfin, les sauces de couchage contenant uniquement comme liant des dispersions styréniques classiques présentent une mauvaise rétention d'eau, c'est-à-dire que de l'eau doit être ajoutée dans la sauce en continu lors du procédé afin que cette sauce conserve sa viscosité initiale et ainsi maintenir une bonne machinabilité au cours du procédé. Il est également possible d'ajouter des agents améliorant la rétention d'eau, mais ces agents ne sont pas totalement satisfaisants ou peuvent présenter un surcoût non négligeable pour la sauce de couchage.

Ainsi, pour résoudre ces problèmes, il a été proposé depuis quelques années de remplacer, en tout ou partie, ces dispersions par des produits d'origine renouvelable. Ces produits peuvent être des amidons ou des dérivés d'amidon, par exemple des dextrines et/ou des amidons natifs.

Le document WO 2008/074957 décrit l'utilisation d'amidon modifié pour la fabrication de compositions de couchage présentant une masse moléculaire élevée et une température de transformation sol/gel particulière. Ces amidons modifiés sont faiblement solubles à température ambiante. Ils subissent une étape de cuisson en Jet-Cooker en solution aqueuse avant utilisation. Il en résulte une composition aqueuse ayant une matière sèche assez élevée qui est utilisée pour fabriquer la composition de couchage, cette composition étant plus fluide que celles réalisées à partir des amidons modifiés classiques. Les propriétés du papier couché obtenu sont tout à fait satisfaisantes.
Toutefois, même si les problèmes de viscosité élevée et de masse sèche de la composition de couchage sont partiellement résolus, il reste encore nécessaire de les améliorer.

La demande WO 2011/131330 A1 décrit quant à elle une sauce de couchage comprenant un mélange amylacé constitué d'un amidon dégradé et d'un amidon natif. Il est indiqué que cette sauce permet d'obtenir de bonnes propriétés pour le papier obtenu (brillant, résistance à l'arrachement) et permet également de faciliter le procédé de transformation du fait de propriétés améliorées de la sauce, notamment en termes de viscosité et de rétention d'eau.

Toutefois, ces améliorations sont encore trop limitées et il existe encore un besoin d'améliorer les procédés de couchage, les propriétés des papiers couchés ainsi obtenus et de trouver de nouvelles sauces permettant ces améliorations.
Il est du mérite de la Demanderesse d'être parvenu à de nouvelles compositions, tout à fait adaptées à être utilisées comme sauces dans des procédés de couchage.

### Résumé de l'invention

L'invention a ainsi pour objet une sauce de couchage comprenant au moins un pigment, de l'eau et :
- entre 30 et 90% en masse de dextrine (A) constituée d'au moins une dextrine de masse moléculaire moyenne en poids M_{A} inférieure à 500 kDa ;
- entre 10 et 70% en masse de dextrine (B) constituée d'au moins une dextrine de masse moléculaire moyenne en poids M_{B} ;
les quantités massiques de dextrines étant rapportées à la quantité totale du mélange de dextrines (A) et (B) dans la composition, caractérisée en ce que M_{B} est supérieure à M_{A} +50 kDa, et.
la dextrine (B) est constituée d'au moins une dextrine waxy.
Cette sauce permet d'obtenir des papiers d'excellente qualité, égalant, voire améliorant les propriétés des papiers couchés obtenus à partir des sauces de couchage à base d'amidon de l'art antérieur, ceci notamment en termes de brillant.

De plus, ces sauces présentent une capacité à la rétention d'eau améliorée permettant de maintenir la machinabilité au cours du procédé de couchage.

### Description détaillée de l'invention

Par sauce de couchage, on entend une composition aqueuse de traitement de surface de papier comprenant un pigment et un liant.
Elle peut être utile pour le couchage ou le surfaçage pigmenté du papier.

La sauce de couchage selon l'invention comprend au moins une dextrine (A) et au moins une dextrine (B), c'est-à-dire un mélange de dextrines (A) et (B).

Les dextrines sont généralement fabriquées à partir d'amidon à l'aide de procédés utilisant l'action de la chaleur, dans un milieu sec ou non, en présence ou non d'agent chimique. Pour la plupart, qu'ils soient discontinus ou continus, ces procédés font appel à des températures de transformation supérieures à 100°C et à la présence facultative d'un acide, d'un agent alcalin et / ou d'un agent oxydant.
Les dextrines sont généralement classées en trois catégories regroupant :
- les dextrines blanches, généralement obtenues par transformation de l'amidon à des températures souvent comprises entre 120 et 170°C, en présence d'agent(s) chimique(s), notamment d'acide, en quantités relativement élevées,
- les dextrines jaunes, souvent fabriquées par transformation de l'amidon à des températures plus élevées, généralement comprises entre 170 et 230°C, en présence d'agent(s) chimiques, notamment d'acide,
- les dextrines dites « British GUM » obtenues par la seule action de la chaleur, à température élevée, souvent supérieure à 230 °C.
Les procédés de dextrinification génèrent différentes réactions. L'importance de chacune de ces réactions varie selon les conditions du procédé telles que la nature et la quantité d'agent chimique utilisé, la teneur en eau lors de la réaction, le profil de température et le temps de réaction. L'homme du métier considère généralement qu'il peut se produire des mécanismes divers lors de la réaction de dextrinification de l'amidon. La réaction d'hydrolyse est significative au début de la transformation et ceci dès 50 °C. Liée à la présence d'acide et d'une quantité d'eau encore suffisante, elle diminue la masse moléculaire. La réaction de condensation ou réversion forme une liaison α(1,6) à partir d'un alcool primaire d'une chaîne et de l'extrémité réductrice d'une autre chaîne. Elle est favorisée par des températures inférieures ou proches de 150°C. La réaction de « transglucosydation », formant une liaison α(1,6) en coupant une liaison α(1,4) sans libérer d'eau, est prédominante à des températures supérieures à 150°C. Permettant l'obtention de molécules davantage branchées, elle est essentielle à l'expression des propriétés des dextrines, en particulier, des dextrines jaunes. D'autres réactions ont également lieu, telles que l'« anhydrisation » interne, entre carbones 1 et 6, ou la recombinaison issue de la réaction entre une extrémité réductrice et un groupement hydroxyle en C2, C3 ou C4. L'importance relative de ces phénomènes confère aux dextrines des propriétés spécifiques. Dans la transformation des dextrines blanches, le mécanisme prépondérant est l'hydrolyse. Il en découle que ces dextrines blanches présentent soit une masse moléculaire élevée avec une faible solubilité dans l'eau, soit le contraire. Dans le cas des dextrines jaunes, l'hydrolyse est importante et l'ensemble des mécanismes décrits ci-dessus ont une importance égale, ce qui aboutit à des produits de faible masse moléculaire, généralement rebranchés, présentant une forte solubilité dans l'eau.

Les dextrines utiles à la composition selon l'invention présentent des caractéristiques particulières de masse moléculaire. Celles-ci découlent donc de la compétition des différents mécanismes réactionnels complexes décrits précédemment.

On peut, pour réaliser la sauce de couchage selon l'invention, utiliser des dextrines de tout type, tant que ces dextrines présentent la masse moléculaire particulière des dextrines (A) et (B) utiles à l'invention.
En ce qui concerne la masse moléculaire (M) de la dextrine (A) ou de la dextrine (B), elle est exprimée en Daltons (Da) et peut être déterminée par l'homme du métier à l'aide d'une chromatographie d'exclusion stérique de type HPSEC-MALLS (High Performance Size Exclusion Chromatography coupled on-line with Multiple Angle Laser Light Scattering).
On peut mesurer cette masse par chromatographie d'exclusion stérique, selon le protocole suivant :
- préparation d'un échantillon par solubilisation de la dextrine, en chauffant à 100°C pendant 30 min dans un solvant de dilution constitué d'un mélange DMSO / NaNO₃ (0,1M de NaNO₃ dans le DMSO), ledit échantillon pouvant présenter une concentration allant de 2 à 10 mg d'amidon par mL de solvant de dilution ;
- utilisation d'un appareil de chromatographie liquide à haute performance (CLHP) équipé d'une pompe, fonctionnant en mode isocratique, faisant circuler un solvant d'élution à 0,3mL/mn, d'un réfractomètre, d'un détecteur laser multiple angle light scattering de 18 angles chauffé à 35°C, par exemple un détecteur DAWN HELEOS de la société Wyatt, et d'un four de thermostatisation des colonnes chauffé à 35°C, par exemple équipé de colonnes de polyhydroxyméthacrylate de type SUPREMA et dont le solvant d'élution est par exemple une solution aqueuse de nitrate de sodium à 0,1 M, contenant 0,02 % en masse d'azide de sodium ;
- injection dans l'appareil d'un volume d'échantillon d'environ 100µL.

Les masses moléculaires moyennes en poids peuvent être déterminées à partir des spectres obtenus, par exemple, en retraitant les spectres en exponentiel 1er ordre, à l'aide du logiciel d'analyse de type ASTRA v.5.

La dextrine (A) est constituée d'au moins une dextrine de masse moléculaire moyenne en poids M_{A} inférieure à 500 kDa. Elle peut ainsi également être constituée d'un mélange de dextrines dont chacune présente cette caractéristique de masse moléculaire moyenne en poids. Avantageusement, M_{A} est comprise entre 5 kDa et 400 kDa, préférentiellement entre 10 kDa et 350 kDa, tout préférentiellement entre 100 kDa et 300 kDa.
La dextrine (A) peut être obtenue à partir d'amidon extrait de céréales telles que le blé, le maïs, l'orge, le triticale, le sorgo ou le riz, de tubercules tels que la pomme de terre ou le manioc, ou de légumineuses telles que le pois et le soja, et de mélanges de tels amidons. Il peut s'agir également d'amidon waxy ou au contraire d'amidon riche en amylose des amidons précédemment cités.
De préférence, la dextrine est obtenue à partir d'amidon de maïs, de blé, de pomme de terre ou de pois, tout préférentiellement de maïs.

La dextrine (B) est constituée d'au moins une dextrine de masse moléculaire moyenne en poids M_{B} supérieure à M_{A} +50 kDa. Elle peut ainsi également être constituée d'un mélange de dextrines dont chacune présente cette caractéristique de masse moléculaire moyenne en poids.
A titre d'exemple, si la sauce de couchage selon l'invention comprend une dextrine (A) de masse M_{A} égale à 300 kDa, la sauce de couchage comprend en outre au moins une dextrine (B) de masse M_{B} supérieure à 350 kDa.
Avantageusement, M_{B} est comprise entre 550 kDa et 5000 kDa, préférentiellement entre 550 kDa et 3000 kDa. Elle est préférentiellement supérieure à 600 kDa, et préférentiellement supérieure à 1 000 kDa. Elle est avantageusement inférieure à 2 500 kDa. Tout préférentiellement, la masse moléculaire moyenne en poids est comprise entre 1 000 kDa et 2 500 kDa.

La dextrine (B) peut être obtenue à partir d'amidon extrait de céréales telles que le blé, le maïs, l'orge, le triticale, le sorgo ou le riz, de tubercules tels que la pomme de terre ou le manioc, ou de légumineuses telles que le pois et le soja, et de mélanges de tels amidons. La dextrine (B) est une dextrine waxy, c'est-à-dire une dextrine obtenue à partir d'un amidon waxy. Un amidon waxy comprend généralement des quantités d'amylopectine allant de 90 à 100% en poids, ces quantités étant exprimées en poids sec d'amylopectine par rapport au poids sec d'amidon, avantageusement de 95 à 100%, très souvent allant de 98 à 100%. Ce pourcentage peut être déterminé par colorimétrie à l'aide d'un dosage à l'iode.
L'amidon waxy peut notamment être obtenu à partir de maïs, de blé, d'orge ou de pomme de terre. Tout préférentiellement, l'amidon waxy est un amidon de maïs waxy.

Les dextrines (A) et (B) peuvent être solubles dans l'eau ou non solubles. Généralement, la dextrine (A) de plus faible poids moléculaire sera fortement soluble dans l'eau, tandis que la dextrine (B) de poids moléculaire plus important est faiblement soluble. Toutefois, il est également possible d'utiliser comme dextrine (B), la dextrine soluble de la demande PCT/FR2012/052651. Par dextrine soluble dans l'eau selon la présente demande, on entend une dextrine présentant une solubilité aqueuse supérieure ou égale à 50%, mesurée à 22°C à une concentration d'amidon sec de 25 g/L d'eau, tel que décrit dans le test A de la demande susmentionnée.

De nombreux procédés de fabrication de dextrines sont connus de l'art antérieur et les dextrines utiles à l'invention sont des produits commercialisés de longue date. A titre d'exemple, on peut citer les dextrines commercialisées par la Demanderesse sous la marque STABILYS®.
La sauce de couchage selon l'invention comprend entre 30 et 90% en masse de dextrine (A), et entre 10 et 70% en masse de dextrine (B), par rapport à la quantité totale du mélange de dextrines (A) et (B) dans la sauce.
Préférentiellement, la quantité massique de dextrine (A) est comprise entre 50 et 85% et la quantité massique de dextrine (B) est comprise entre 15 et 50%. Tout préférentiellement, la quantité massique de dextrine (A) est comprise entre 70 et 80% et la quantité massique de dextrine (B) est comprise entre 20 et 30%.

Selon un mode tout particulièrement préféré, la sauce comprend, par rapport à la quantité totale du mélange de dextrines (A) et (B) dans la sauce, entre 70 et 80% d'une quantité massique de dextrine (A) présentant une M_{A} comprise entre 10 et 30 kDa et entre 20 et 30% d'une quantité massique de dextrine (B) waxy présentant une M_{B} comprise entre 1000 kDa et 2500 kDa.

En plus des dextrines décrites précédemment, la sauce de couchage contient en outre de l'eau et un ou plusieurs pigments.

La sauce de couchage peut comprendre, en plus de l'eau, éventuellement de faibles quantités d'au moins un autre solvant tel qu'un alcool, mais on préfère que le solvant de la sauce soit constitué d'eau. La matière sèche de la sauce est constituée des ingrédients de la sauce à l'exclusion des solvants.
La sauce de couchage présente avantageusement une matière sèche comprise entre 40 et 85%, préférentiellement entre 50 et 75%, voire entre 55 et 73%.

Des exemples de pigments appropriés comprennent les argiles comme le kaolin, mais aussi les argiles calcinées, les silicates d'aluminium hydratés, la bentonite, le carbonate de calcium, le sulfate de calcium ou gypse, les silices en particulier les silices précipitées, le dioxyde de titane, l'alumine, le trihydrate d'aluminium, des pigments plastiques tels que ceux en polystyrène, le blanc satin, le talc, le sulfate de baryum, l'oxyde de zinc et des mélanges de deux ou plus.
Les pigments sont préférentiellement le kaolin, le carbonate de calcium, le talc ou les mélanges de ces pigments.
Le ou les pigments appropriés pourront facilement être sélectionnés par un homme du métier selon le type de sauce de couchage à obtenir. Pour préparer la sauce de couchage selon l'invention, on peut ajouter le pigment sous forme de dispersion du pigment dans de l'eau.

La sauce de couchage peut aussi contenir un ou plusieurs des polymères additionnels ayant fonction de liant, autre que les dextrines (A) et (B). Ce polymère additionnel peut être un polymère choisi parmi les polymères styréniques, par exemple un copolymère styrène-butadiène, styrène-acrylate ou styrène-butadiène-acrylate, les polymères de type (méth)acrylique ou de type (méth)acrylate, les polyacétates de vinyle saponifiés ou non, les amidons différents des dextrines (A) et (B) et les liants protéiques telles que la caséine, la gélatine, les protéines de soja. A titre de polymère additionnel, on préfère un polymère choisi parmi les polymères styréniques.
Ces polymères additionnels peuvent avantageusement être introduits dans la composition par l'intermédiaire d'une dispersion dans l'eau.

La sauce de couchage selon l'invention peut comprendre, pour 100 parts de pigments, de 0,5 à 200 parts du mélange de dextrines (A) et (B), éventuellement de 0 à 100 parts de polymère additionnel, la somme des parts de dextrines (A) et (B) et de polymère additionnel allant de 0,5 à 200 parts, avantageusement de 2 à 30 parts, par exemple de 3 à 20 parts.

Il est précisé que le nombre de parts du mélange de dextrines (A) et (B) est la somme des parts de dextrine (A) et des parts de dextrine (B).
Avantageusement, la sauce de couchage comprend, pour 100 parts de pigments, de 0,5 à 25 parts du mélange de dextrines (A) et (B), de 0 à 20 parts et préférentiellement de 1 à 15 parts de polymère additionnel, la somme des parts du mélange de dextrines (A) et (B) et de polymère additionnel allant de 2 à 30 parts, préférentiellement de 3 à 20 parts.
Tout préférentiellement, la sauce de couchage comprend, pour 100 parts de pigments, de 0,5 à 10 parts du mélange de dextrines (A) et (B), de 2 à 10 parts de polymère additionnel, la somme des parts des parts du mélange de dextrines (A) et (B) et de polymère additionnel allant de 3 à 20 parts.

La sauce de couchage comprend généralement un régulateur de pH, par exemple une base telle l'hydroxyde de sodium, voire un acide tel que l'acide chlorhydrique.
Le pH de la sauce, allant généralement de 8 à 10,5, préférentiellement compris entre 8,5 et 10, est ajusté en ajoutant des quantités sélectionnées de régulateur de pH.

La sauce de couchage peut également comprendre des additifs classiquement utilisés dans les sauces de couchage.
A titre d'exemples d'additifs, on peut citer les épaississants. Des exemples d'épaississants appropriés comprennent les épaississants synthétiques ou les épaississants d'origine naturelle tels que les éthers de cellulose comme la carboxyméthylcellulose (CMC), l'hydroxyéthylcellulose, l'hydroxypropylcellulose, l'éthylhydroxyéthylcellulose ou la méthylcellulose, les alginates tels que l'alginate de sodium, la gomme xanthane, les carraghénanes et les galactomannanes comme la gomme de guar.
D'autres additifs qui peuvent être utilisés sont les tensioactifs, par exemple les tensioactifs cationiques, les tensioactifs anioniques, non ioniques, amphotères et tensio-actifs fluorés.
Des durcisseurs peuvent également être utilisés comme par exemple des composés halogènes actifs, composés vinylsulfone ou des composés époxy.
Des agents dispersants comme les polyphosphates, les polyacrylates ou les polycarboxylates peuvent aussi être utilisés.
Comme exemple d'additifs pouvant également être compris dans la sauce de couchage de l'invention, on peut citer les agents améliorant la fluidité, les lubrifiants, les agents antimousse, les azurants optiques, les agents conservateurs comme par exemple les composés benzisothiazolone et isothiazolone, les agents biocides comme par exemple le métaborate, le thiocyanate et le benzonate sodium.
D'autres additifs pouvant être cités sont également les inhibiteurs de jaunissement tels que les dérivés de sulfonate de sodium, les absorbant ultraviolet, les antioxydants.
Les agents de résistance à l'eau, qui peuvent être choisis parmi les résines cétone, les latex anioniques ou le glyoxal et/ou les agents de résistance humide ou à sec, telles que les résines à base de glyoxal, les polyéthylènes oxydés, les résines de mélamine ou urée-formaldéhyde, peuvent également être utilisés.
Des agents de réticulation, des additifs de rétention du brillant de l'encre ou des additifs de résistance aux graisses et à l'huile peuvent également être compris dans la sauce de couchage de l'invention.
L'homme du métier pourra sélectionner les additifs afin d'obtenir la sauce de couchage et le papier ayant les propriétés désirées. La sauce de couchage peut comprendre, pour 100 parts de pigments, de 0 à 10 parts d'additifs, par exemple de 0,1 à 5 parts d'additifs.

L'homme du métier peut aisément sélectionner les quantités de chacun des constituants afin d'avoir la viscosité qui permettra d'appliquer la composition sur le papier de manière satisfaisante lors du procédé de couchage. Par exemple, la sauce de couchage selon l'invention présente une viscosité Brookfield allant de 500 à 2000 mPa.s, par exemple entre 600 et 1200 mPa.s, préférentiellement entre 600 et 900 mPa.s et/ou une viscosité Hercules allant de 40 à 90 mPa.s et/ou une viscosité ACAV allant de 30 à 80 mPa.s. La viscosité Brookfield peut être mesurée à l'aide d'un viscosimètre de marque Brookfield dont la vitesse de rotation de la broche est de 100 tours/minute. La viscosité Hercules peut être mesurée à l'aide d'un viscosimètre de marque Hercules dont la vitesse de rotation de la broche est de 4400 tours/minute équipé d'un bob « E ». La viscosité ACAV peut être mesurée à un taux de cisaillement de 1000000 s⁻¹. La viscosité de la sauce augmente principalement avec la matière sèche, la quantité de pigments et les quantités d'amidon, de polymère additionnel et d'épaississant.

L'invention porte également sur un procédé de fabrication de sauce de couchage selon l'invention comprenant au moins une étape de mélange des constituants de la sauce. Le procédé de fabrication de la sauce de couchage comprend généralement :
- une étape de solubilisation préalable des dextrines (A) et/ou (B), par exemple par cuisson en présence d'eau,
- suivie d'une étape de mélange de la ou desdites dextrines solubilisées avec les pigments, l'eau, les éventuels polymères additionnels, régulateurs de pH et additifs.
Selon la variante où les dextrines (A) et (B) sont des dextrines solubles dans l'eau, il est également avantageux de réaliser la sauce de couchage sans étape de cuisson préalable des dextrines, c'est-à-dire par simple mélange des dextrines (A) et (B), des pigments, de l'eau, des éventuels polymères additionnels, régulateurs de pH et additifs. Selon cette variante, il est également possible de réaliser l'étape de solubilisation des dextrines (A) et (B), non pas par cuisson, mais par simple mélange dans de l'eau.

Lorsque l'on réalise une étape de cuisson de l'amidon, celle-ci peut se faire en Jet-Cooker ou en batch, par exemple à une température comprise entre 70 et 160°C. Généralement, la cuisson de l'amidon se fait en solution aqueuse, cette solution aqueuse présentant par exemple un pourcentage massique en amidon allant de 10 à 40%.

Un autre objet de l'invention est un procédé de couchage de papier comprenant au moins une étape de couchage sur un papier de la sauce selon l'invention, par exemple de 1 à 5 étapes, notamment de 2 à 3 étapes.
Le procédé de couchage selon l'invention présente l'avantage de pouvoir utiliser des vitesses d'enduction supérieures que certaines sauces de couchage à base d'amidon de l'art antérieur, ce qui permet d'augmenter la productivité des procédés de couchage de papier.

Selon l'invention, le terme « papier » englobe tout type de papier ou carton apte à subir un traitement de couchage.
Le couchage du papier peut être effectué en ligne dans la machine à papier ou sur une machine d'enduction séparée.
Selon la qualité du papier ou de carton désiré et son utilisation finale, il peut être couché sur un seul ou des deux côtés. Chaque côté peut être couché une seule fois ou une pluralité de fois sur un ou deux côtés, à condition qu'au moins l'une des couches de couchage soit réalisée à partir de la sauce de couchage selon l'invention. Selon un mode particulièrement intéressant de l'invention, la couche supérieure, c'est-à-dire en contact avec l'environnement ou encore celle qui est destinée à être imprimée, est obtenue à partir de la sauce de couchage selon l'invention. En effet, la couche obtenue à partir de la composition selon l'invention présente une résistance mécanique importante et est particulièrement brillante, en comparaison avec les sauces de couchage à base d'amidon de l'art antérieur.

Pour réaliser une couche, on réalise tout d'abord une étape de revêtement suivie d'une étape de séchage.
L'étape de revêtement de papier selon l'invention peut être réalisée par n'importe quel procédé de revêtement connu de l'homme du métier. Il peut être réalisé par exemple par couchage lame d'air, couchage crayon, couchage barre lisse, couchage barre fileté, par pulvérisation, couchage lame, couchage Rideau, couchage size-press, du couchage film press, les techniques dites de brush coating, cast coating, gravure coating, jet applicator coating, short dwell coating, slide hopper coating, flexographic coating et reverse roll coating.
Après l'étape de revêtement, la couche est obtenue par une étape de séchage. Cette étape de séchage peut être réalisée par un séchage à l'air, par convection, par contact, par radiation, par exemple par radiation infra-rouge.
Eventuellement, le procédé de couchage peut comprendre une étape de calandrage, ce qui permet d'augmenter le brillant du papier couché et le lissé. L'étape de calandrage est généralement réalisée en passant le papier revêtu et séché dans une calandre ou entre des rouleaux qui sont généralement recouverts d'élastomères. Pour de meilleurs résultats, le calandrage peut être effectué avec des rouleaux chauffés.

La présente demande divulgue aussi un papier couché obtenu à partir du procédé de couchage de l'invention.
Le papier obtenu à partir du procédé de couchage de l'invention présente des excellentes propriétés, en particulier une résistance à l'état humide supérieure à celle des papiers couchés obtenus à partir des sauces de couchage à base d'amidon de l'art antérieur.

Chaque couche obtenue par le procédé de l'invention peut comprendre une quantité de matière allant de 1 à 30 g/m², par exemple de 4 à 25 g/m², préférentiellement de 6 à 20 g/m².

Le papier couché peut comprendre de 1 à 5 couches de couchage, par exemple de 2 à 3 couches de couchage, dont au moins une est obtenue à partir de la sauce de couchage selon l'invention.

Du fait de ses propriétés supérieures, le papier couché selon l'invention peut être avantageusement utilisé dans un procédé d'impression comme par exemple une impression de type off set, héliogravure, rotogravure, lithogravure, jet d'encre ou flexographie, préférentiellement de type off set ou héliogravure.

Afin d'illustrer et de montrer les avantages de la présente invention, des papiers ont été fabriqués à partir de sauces de couchage selon l'invention et comparatives dans les exemples qui suivent.

### Exemples

### Exemple 1 : Fabrication de papier pour impression off-set

### Produits utilisés

Les produits suivants ont été utilisés pour réaliser les sauces de couchage :
Polymère additionnel : Latex styrène-butadiène
Pigment 1 : Dispersion de carbonate de calcium
Pigment 2 : Dispersion de kaolin
Lubrifiant : stéarate
Epaississant synthétique : polyacrylate

### Azurant optique

### Eau

### Solution aqueuse de soude à une concentration de 10 mol.L⁻¹

Les amidons utilisés dans les sauces de couchage sont les suivants :
AMIDON 1 : Amidon de maïs oxydé commercialisé pour la préparation de sauces de couchage.
AMIDON 2 : Amidon de maïs waxy natif.
AMIDON 3 : Dextrine de maïs waxy de masse moléculaire moyenne en poids égale à 300 kDa.
AMIDON 4 : Dextrine de maïs de masse moléculaire moyenne en poids égale à 200 kDa.
AMIDON 5 : Dextrine de maïs de masse moléculaire moyenne en poids égale à 20 kDa.
AMIDON 6 : Dextrine de maïs waxy de masse moléculaire moyenne en poids égale à 1200 kDa.

### Cuisson des amidons

On réalise une suspension d'amidon en mélangeant le ou les amidon(s) (43% en masse) dans de l'eau dans une cuve ouverte, à l'aide d'un mélangeur et une broche défloculeuse. Une canule vapeur est introduite dans la cuve et la température monte progressivement. L'agitation initiale est 700 tr/min. Pendant que la température augmente, l'amidon commence à gélatiniser ; la vitesse d'agitation est alors augmentée jusque 1700 tr/min. Puis, après éclatement de l'amidon, la vitesse est rediminuée à 700 tr/min. La température atteint 95°C environ et est maintenue pendant 20 minutes à cette température. La matière sèche de la colle est de 33%.

### Préparation de la sauce

Les constituants des sauces selon l'invention (I) et comparatives (CP) sont dans les proportions figurant dans le Tableau 1.

Chacune des dispersions de pigments sont préalablement homogénéisées puis le protocole suivant est réalisé :
Les constituants de la sauce sont introduits et mélangés dans un mélangeur et dans les proportions indiquées du Tableau 1 :
- les dispersions de pigments pendant 10 minutes ;
- puis le latex pendant 10 minutes ;
- puis l'amidon cuit pendant 10 minutes ;
- puis le reste des constituants pendant 10 minutes (additifs, complément d'eau et de la soude concentrée pour ajuster le pH à 9,5).

Cinq litres de chacune des sauces sont ainsi préparés pour l'enduction de papier et la caractérisation rhéologique.

Les viscosités en mPa.s de type Brookfield, Hercules (4400 tours/min, bob E) et ACAV (mesurée à une fréquence de 1000000 s⁻¹) figurent également dans ce Tableau.
La capacité à la rétention d'eau de la sauce (en g/m²), également reprise dans le Tableau 1 à la ligne intitulée GRADEK, le long du procédé de couchage est déterminée à l'aide d'un appareil l'appareil AAGWR (Abo Akademy Gradek water retention).

**Tableau 1 : sauces de couchages pour papier impression off-set**

| ref sauces | CP1 | CP2 | I3 | I4 | I5 | I6 |
|---|---|---|---|---|---|---|
| Latex (parts) | 7,5 | 7,5 | 7,5 | 7,5 | 7,5 | 6,5 |
| AMIDON 1 (parts) | 2 | 0 | 0 | 0 | 0 | 0 |
| AMIDON 2 (parts) | 0 | 0,2 | 0 | 0 | 0 | 0 |
| AMIDON 3 (parts) | 0 | 0 | 0 | 1 | 0 | 0 |
| AMIDON 4 (parts) | 0 | 0 | 0 | 0 | 1,5 | 2,25 |
| AMIDON 5 (parts) | 0 | 1,8 | 1 | 0 | 0 | 0 |
| AMIDON 6 (parts) | 0 | 0 | 1 | 1 | 0,5 | 0,75 |
| Pigment 1 (parts) | 80 | 80 | 80 | 80 | 80 | 80 |
| Pigment 2 (parts) | 20 | 20 | 20 | 20 | 20 | 20 |
| Azurant optique (parts) | 1,00 | 1,00 | 1,00 | 1,00 | 1,00 | 1,00 |
| Lubrifiant (parts) | 0,50 | 0,50 | 0,50 | 0,50 | 0,50 | 0,50 |
| Epaississant (parts) | 0,10 | 0,10 | 0,10 | 0,10 | 0,10 | 0,10 |
| Matière Sèche (%) | 65 | 65 | 65 | 65 | 65 | 65 |
| pH | 9,5 | 9,5 | 9,5 | 9,5 | 9,5 | 9,5 |
| Visco Brookfield (mPa.s) | 700 | 610 | 600 | 580 | 540 | 620 |
| Visco Hercules (mPa.s) | 51 | 36 | 41 | 39 | 36 | 41 |
| Visco ACAV (mPa.s) | 59 | 54 | 52 | 50 | 48 | 51 |
| **GRADEK** | **67** | **66** | **61** | **62** | **60** | **57** |

La sauce CP1 représente une sauce de couchage à base de latex synthétique et d'amidon commercial.
La sauce CP2 représente une sauce de couchage particulièrement préférée décrite dans la demande WO 2011/131330 A1.

Les sauces selon l'invention présentent, par rapport aux sauces comparatives, des viscosités relativement proches, avec un léger avantage pour les sauces selon l'invention qui ont des viscosités ACAV plus basses. La viscosité ACAV est représentative de la viscosité de la sauce lors du couchage du papier. Plus la viscosité ACAV est basse, plus la vitesse machine peut être augmentée.
Les sauces selon l'invention présentent également un GRADEK plus faible et donc une meilleure capacité à retenir l'eau dans la sauce lors du procédé. Cela permet d'avoir un procédé de couchage plus stable, car le besoin de réajuster la matière sèche dans la sauce au cours de ce procédé est moindre.

### Réalisation des papiers

Les enductions ont été réalisées sur un papier de base, de grammage 42,5 g/m², à l'aide du pilote helicoater, fabriqué par DIXON, avec une dépose de sauce de 11 g/m² environ, la vitesse de la machine étant de 1200 m/min. Le séchage par infrarouge est réalisé à l'aide de 14 lampes de 2000 W chacune et le temps de séchage est de 30 secondes.

Les papiers sont ensuite calandrés en un passage à 90°C avec une pression de 220daN/cm sur une calandreuse feuille à feuille du fabricant ABK.

La brillance des papiers obtenus après calandrage a été mesurée selon la norme TAPPI T 480.

La blancheur D 65 des papiers obtenus après calandrage a été mesurée selon la norme TAPPI T 525.

Les mesures de l'arrachage à l'état sec ont été déterminées à l'aide d'un appareil IGT AIC 2-5 équipé de molettes de 50 mm revêtues d'un blanchet, à l'aide d'une encre IGT 3804, sur des éprouvettes de papier de format 340 x 55 mm.
On dépose l'encre sur les molettes avant transfert sur le papier. Le transfert est réalisé en appliquant sur la molette une pression de 625 N, la vitesse du porte-échantillon étant en accélération constante et atteignant une vitesse finale de 2m/s en bout d'échantillon.

L'arrachage à l'état humide est mesuré selon le même protocole, à la différence que la vitesse du porte-échantillon est constante à 0,2 m/s et que l'on réalise, avant transfert de l'encre, un transfert d'eau. Ce transfert est réalisé à l'aide d'une première molette tramée de 38 mm et en appliquant sur cette molette une pression de 400 N.

Les caractéristiques des papiers obtenus à partir des sauces, sont détaillées dans le tableau 2 ci-dessous.

**Tableau 2 : caractéristiques des papiers off set**

| TESTS PAPIERS | | CP1 | CP2 | I3 | I4 | I5 | I6 |
|---|---|---|---|---|---|---|---|
| GRAMMAGE | g/m2 | 53 | 54 | 53 | 54 | 53 | 53 |
| IGTSEC | m/s | 1,14 | 1,19 | 1,15 | 1,16 | 1,15 | 1,15 |
| IGT HUMIDE | %DO | 94 | 96 | 94 | 95 | 95 | 95 |
| BRILLANT | % | 62,73 | 64,97 | 65,47 | 66,01 | 66,53 | 62,20 |
| BLANCHEUR SCE/0 | % | 77,15 | 77,41 | 77,18 | 77,75 | 77,45 | 77,65 |

La comparaison des papiers selon l'invention des essais l3, l4 et l5 avec ceux des essais CP1 et CP2 montre qu'il est possible d'améliorer, à quantités identiques d'amidon, le brillant du papier obtenu. L'essai l6 montre qu'il est possible d'augmenter le taux de remplacement de latex en conservant des propriétés encore satisfaisantes.

### Exemple 2 : Fabrication de papier pour impression par héliogravure

### Produits utilisés

Les mêmes produits ont été utilisés pour réaliser les sauces de couchage que pour les sauces de couchage de l'exemple 1, hormis que le latex styrène-butadiène a été remplacé par un latex styrène-acrylate et qu'une dispersion de talc est également utilisée (Pigment 3).

### Fabrication des sauces

Les sauces sont fabriquées en suivant le même protocole que celui de l'exemple 1. Les constituants de la sauce comparative (CP) et de la sauce selon l'invention (I) sont dans les proportions figurant dans le Tableau 3. La viscosité ACAV ainsi que le GRADEK figurent également dans ce Tableau.

**Tableau 3 : sauces de couchages pour papier impression héliogravure**

| N° sauce | CP8 | I9 |
|---|---|---|
| Latex (parts) | 3,4 | 3,4 |
| AMIDON 1 (parts) | 1 | 0 |
| AMIDON 3 (parts) | 0 | 0,75 |
| AMIDON 6 (parts) | 0 | 0,25 |
| Pigment 1 (parts) | 60 | 60 |
| Pigment 2 (parts) | 20 | 20 |
| Pigment 3 (parts) | 20 | 20 |
| Azurant optique (parts) | 0,50 | 0,50 |
| Lubrifiant (parts) | 0,60 | 0,60 |
| Epaississant (parts) | 0,20 | 0,20 |
| Matière Sèche (%) | 60 | 60 |
| pH | 9 | 9 |
| Visco ACAV (mPa.s) | 44 | 37 |
| GRADEK | 96 | 92 |

On peut conclure que l'on observe encore une amélioration de la viscosité ACAV, synonyme d'une capacité de la sauce à être utilisée à plus grande vitesse que les sauces de l'art antérieur.
Par ailleurs, la rétention d'eau de la sauce selon l'invention est également améliorée.

Les papiers sont fabriqués selon le même protocole de l'exemple 1, aux différences suivantes près :
- le grammage du papier avant couchage est de 38,5 g/m² ;
- les papiers sont calandrés en un passage à 110°C avec une pression de 220daN/cm sur une calandreuse feuille à feuille du fabricant ABK.
Les propriétés des papiers obtenus sont reportées Tableau 4.

**Tableau 4 : caractéristiques des papiers héliogravure**

| TESTS PAPIERS | | CP8 | I9 |
|---|---|---|---|
| GRAMMAGE | g/m2 | 50 | 49,5 |
| IGT SEC | m/s | 1,11 | 1,40 |
| IGT HUMIDE | %DO | 96 | 96 |
| BRILLANT | % | 59,54 | 61,51 |
| BLANCHEUR SCE/0 | % | 75,78 | 77,18 |

Cet essai montre également que le brillant du papier selon l'invention et la résistance de la couche de couchage de celui-ci sont excellents.

## Revendications

1. Sauce de couchage comprenant au moins un pigment, de l'eau et :
• entre 30 et 90% en masse de dextrine (A) constitué d'au moins une dextrine de masse moléculaire moyenne en poids M_{A} inférieure à 500 kDa ;
• entre 10 et 70% en masse de dextrine (B) constitué d'au moins une dextrine de masse moléculaire moyenne en poids M_{B} ;
les quantités massiques de dextrines étant rapportées à la quantité totale du mélange de dextrines (A) et (B) dans la composition,
**caractérisée en ce que** M_{B} est supérieure à M_{A} +50 kDa et
la dextrine (B) est constituée d'au moins une dextrine waxy.

2. Sauce de couchage selon la revendication 1 **caractérisée en ce que** M_{A} est comprise entre 5 kDa et 400 kDa.

3. Sauce de couchage selon l'une des revendications précédentes **caractérisée en ce que** M_{A} est comprise entre 10 et 350 kDa.

4. Sauce de couchage selon l'une des revendications précédentes **caractérisée en ce que** M_{B} est comprise entre 550 kDa et 5000 kDa, préférentiellement entre 550 kDa et 3000 kDa.

5. Sauce de couchage selon l'une des revendications précédentes **caractérisée en ce que** M_{B} est comprise entre 1000 kDa et 2500 kDa.

6. Sauce de couchage selon l'une des revendications précédentes **caractérisée en ce que**, par rapport à la quantité totale du mélange de dextrines (A) et (B), la quantité massique de dextrine (A) est comprise entre 70 et 80% et la quantité massique de dextrine (B) est comprise entre 20 et 30%.

7. Sauce de couchage selon l'une des revendications précédentes **caractérisée en ce qu'**elle comprend en outre au moins un polymère additionnel liant, qui peut être un polymère choisi parmi les polymères styréniques, par exemple un copolymère styrène-butadiène, styrène-acrylate ou styrène-butadiène-acrylate, les polymères de type (méth)acrylique ou de type (méth)acrylate, les polyacétates de vinyle saponifiés ou non et les liants protéiques telles que la caséine, la gélatine, les protéines de soja.

8. Sauce de couchage selon l'une des revendications précédentes **caractérisée en ce qu'**elle comprend, pour 100 parts de pigments, de 0,5 à 200 parts de mélange de dextrines (A) et (B), éventuellement de 0 à 100 parts de polymère additionnel, la somme des parts du mélange de dextrines (A) et (B) et de polymère additionnel éventuel allant de 0,5 à 200 parts, avantageusement de 2 à 30 parts, par exemple de 3 à 20 parts.

9. Sauce de couchage selon l'une des revendications 7 et 8 **caractérisée en ce qu'**elle comprend, pour 100 parts de pigments, de 0,5 à 25 parts de mélange de dextrines (A) et (B), de 1 à 15 parts de polymère additionnel, la somme des parts du mélange de dextrines (A) et (B) et de polymère additionnel allant de 2 à 30 parts, par exemple de 3 à 20 parts.

10. Sauce de couchage selon l'une des revendications précédentes **caractérisée en ce qu'**elle présente un pH allant de 8 à 10,5, préférentiellement compris entre 8,5 et 10.

11. Sauce de couchage selon l'une des revendications précédentes **caractérisée en ce que** sa matière sèche est comprise entre 40 et 85%, préférentiellement entre 50 et 75%, voire entre 55 et 73%.

12. Sauce de couchage selon l'une des revendications précédentes **caractérisée en ce qu'**elle présente une viscosité Brookfield allant de 500 à 2000 mPa.s et/ou une viscosité Hercules allant de 40 à 90 mPa.s et/ou une viscosité ACAV allant de 30 et 80 mPa.s.

13. Procédé de couchage de papier **caractérisé en ce qu'**il comprend au moins une étape de couchage sur un papier de la sauce selon l'une des revendications précédentes, par exemple de 1 à 5 étapes, préférentiellement de 2 à 3 étapes.

## Patentansprüche

1. Streichmasse, welche wenigstens ein Pigment und Wasser umfasst sowie:
• 30 bis 90 Gewichtsprozent Dextrin (A), umfassend wenigstens ein Dextrin mit einem mittleren Molekulargewicht M_{A} kleiner 500 kDa;
• 10 bis 70 Gewichtsprozent Dextrin (B), umfassend wenigstens ein Dextrin mit einem mittleren Molekulargewicht M_{B};
wobei sich die Gewichtsmengen der Dextrine auf die Gesamtmenge der Mischung aus Dextrin (A) und (B) in der Zusammensetzung beziehen,
**dadurch gekennzeichnet, dass** M_{B} größer ist als M_{A} +50 kDa, und
Dextrin (B) wenigstens ein Dextrin-Waxy umfasst.

2. Streichmasse nach Anspruch 1, **dadurch gekennzeichnet, dass** M_{A} 5 bis 400 kDa beträgt.

3. Streichmasse nach einem der vorhergehenden Ansprüche, **dadurch gekennzeichnet, dass** M_{A} 10 bis 350 kDa beträgt.

4. Streichmasse nach einem der vorhergehenden Ansprüche, **dadurch gekennzeichnet, dass** M_{B} 550 bis 5000 kDa beträgt, vorzugsweise 550 bis 3000 kDa.

5. Streichmasse nach einem der vorhergehenden Ansprüche, **dadurch gekennzeichnet, dass** M_{B} 1000 bis 2500 kDa beträgt.

6. Streichmasse nach einem der vorhergehenden Ansprüche, **dadurch gekennzeichnet, dass** bezogen auf die Gesamtmenge der Mischung aus Dextrin (A) und (B) die Gewichtsmenge von Dextrin (A) 70 bis 80 % beträgt und die Gewichtsmenge von Dextrin (B) 20 bis 30 % beträgt.

7. Streichmasse nach einem der vorhergehenden Ansprüche, **dadurch gekennzeichnet, dass** sie ferner wenigstens ein zusätzliches Bindepolymer umfasst, welches ein Polymer sein kann, das gewählt ist aus styrolischen Polymeren, beispielsweise aus Styrol-Butadien-, Styrol- Acrylat- oder Styrol- Butadien-Acrylat-Polymeren, Polymeren vom Typ Methacryl oder Methacrylat, verseiften oder nicht verseiften Polyvinylacetaten und proteinhaltigen Bindemitteln wie Casein, Gelatine oder Soja-Proteinen.

8. Streichmasse nach einem der vorhergehenden Ansprüche, **dadurch gekennzeichnet, dass** sie auf 100 Teile Pigmente 0,5 bis 200 Teile einer Mischung aus Dextrin (A) und (B) enthält, ggf. 0 bis 100 Teile zusätzliches Polymer, wobei die Summe der Teile der Mischung aus Dextrin (A) und (B) sowie der Teile zusätzliches Polymer ggf. 0,5 bis 200 Teile beträgt, vorteilhafterweise 2 bis 30 Teile, beispielsweise 3 bis 20 Teile.

9. Streichmasse nach einem der Ansprüche 7 und 8, **dadurch gekennzeichnet, dass** sie auf 100 Teile Pigmente 0,5 bis 25 Teile einer Mischung aus Dextrin (A) und (B) enthält und 1 bis 15 Teile zusätzliches Polymer, wobei die Summe der Teile der Mischung aus Dextrin (A) und (B) sowie der Teile zusätzliches Polymer 2 bis 30 Teile beträgt, beispielsweise 3 bis 20 Teile.

10. Streichmasse nach einem der vorhergehenden Ansprüche, **dadurch gekennzeichnet, dass** sie einen pH-Wert von 8 bis 10,5, vorzugsweise von 8,5 bis 10 aufweist.

11. Streichmasse nach einem der vorhergehenden Ansprüche, **dadurch gekennzeichnet, dass** die Trockenmasse 40 bis 85 % beträgt, vorzugsweise 50 bis 75 % oder 55 bis 73 %.

12. Streichmasse nach einem der vorhergehenden Ansprüche, **dadurch gekennzeichnet, dass** sie eine Brookfield-Viskosität von 500 bis 2000 mPa.s und/oder eine Hercules-Viskosität von 40 bis 90 mPa.s und/oder eine ACAV-Viskosität von 30 bis 80 mPa.s aufweist.

13. Papierbestreichverfahren, **dadurch gekennzeichnet, dass** es wenigstens einen Schritt des Bestreichens eines Papiers mit der Streichmasse nach einem der vorhergehenden Ansprüche umfasst, beispielsweise mit 1 bis 5 Schritten, vorzugsweise mit 2 bis 3 Schritten.

## Claims

1. A coating color comprising at least one pigment, water and:
• between 30 and 90% by weight of dextrin (A) composed of at least one dextrin with a weight-average molecular weight M_{A} of less than 500 kDa;
• between 10 and 70% by weight of dextrin (B) composed of at least one dextrin with a weight-average molecular weight M_{B};
the amounts by weight of dextrins being with respect to the total amount of the mixture of dextrins (A) and (B) in the composition, **characterized in that** M_{B} is greater than M_{A} + 50 kDa and
the dextrin (B) is composed of at least one waxy dextrin..

2. The coating color as claimed in claim 1, **characterized in that** M_{A} is between 5 kDa and 400 kDa.

3. The coating color as claimed in either of the preceding claims, **characterized in that** M_{A} is between 10 kDa and 350 kDa.

4. The coating color as claimed in one of the preceding claims, **characterized in that** M_{B} is between 550 kDa and 5000 kDa, preferably between 550 kDa and 3000 kDa.

5. The coating color as claimed in one of the preceding claims, **characterized in that** M_{B} is between 1000 kDa and 2500 kDa.

6. The coating color as claimed in one of the preceding claims, **characterized in that**, with respect to the total amount of the mixture of dextrins (A) and (B), the amount by weight of dextrin (A) is between 70 and 80% and the amount by weight of dextrin (B) is between 20 and 30%.

7. The coating color as claimed in one of the preceding claims, **characterized in that** it additionally comprises at least one additional binding polymer which can be a polymer chosen from styrene polymers, for example a styrene/butadiene, styrene/acrylate or styrene/butadiene/acrylate copolymer, polymers of (meth)acrylic type or of (meth)acrylate type, saponified or nonsaponified polyvinyl acetates, and protein binders, such as casein, gelatin, or soya proteins.

8. The coating color as claimed in one of the preceding claims, **characterized in that** it comprises, per 100 parts of pigments, from 0.5 to 200 parts of mixture of dextrins (A) and (B) and optionally from 0 to 100 parts of additional polymer, the sum of the parts of the mixture of dextrins (A) and (B) and of optional additional polymer ranging from 0.5 to 200 parts and advantageously from 2 to 30 parts, for example from 3 to 20 parts.

9. The coating color as claimed in either of claims 7 and 8, **characterized in that** it comprises, per 100 parts of pigments, from 0.5 to 25 parts of mixture of dextrins (A) and (B) and from 1 to 15 parts of additional polymer, the sum of the parts of the mixture of dextrins (A) and (B) and of additional polymer ranging from 2 to 30 parts, for example from 3 to 20 parts.

10. The coating color as claimed in one of the preceding claims, **characterized in that** it exhibits a pH ranging from 8 to 10.5, preferably between 8.5 and 10.

11. The coating color as claimed in one of the preceding claims, **characterized in that** its solids content is between 40 and 85%, preferably between 50 and 75% and indeed even between 55 and 73%.

12. The coating color as claimed in one of the preceding claims, **characterized in that** it exhibits a Brookfield viscosity ranging from 500 to 2000 mPa.s and/or a Hercules viscosity ranging from 40 to 90 mPa.s and/or an ACAV viscosity ranging from 30 to 80 mPa.s.

13. A process for coating paper, **characterized in that** it comprises at least one stage of coating a paper with the color as claimed in one of the preceding claims, for example from 1 to 5 stages and preferably from 2 to 3 stages.
